# EUROPEAN PATENT APPLICATION

(11) **EP 2 790 402 A1**
(43) Date of publication of application: **15.10.2014**
(21) Application number: 13382277.5
(22) Date of filing: 05.07.2013
(51) Int. Cl.: H04N 5/74, H04N 5/225

(54) **Image magnifying apparatus**

(30) Priority: 09.04.2013 KR 20130038372
(71) Applicant: HIMS International Corp., Daejeon 305-350 (KR)
(72) Inventor: Yang Taik, Yoon, 305-745 Daejeon (KR); Kyeong Seon, Choi, 305-759 Daejeon (KR); Sang Jun, Lee, 302-903 Daejeon (KR)
(74) Representative: Urizar Anasagasti, Jesus Maria

(57) **Abstract**

Disclosed herein is an image magnifying apparatus which automatically brings a target into focus using a diopter lens depending on whether the target is at a short distance or at a long distance. The orientation of a camera and short- or long-distance focusing of a camera lens can be automatically controlled to provide a clear image to a user, whereby even a user with low vision, a blind user, an aged user, a hand tremor user, etc. can easily use the apparatus. Furthermore, the present invention provides lighting suitable for user environment, thus providing a clear image to the user.

## Description

### BACKGROUND OF THE INVENTION

### 1. Field of the Invention

The present invention relates generally to image magnifying apparatuses which automatically brings a target into focus using a diopter lens depending on whether the target is at a short distance or at a long distance, and more particularly, to an image magnifying apparatus in which the orientation of a camera and short- or long-distance focusing of a camera lens can be automatically controlled to provide a clear image to a user, whereby even a user with low vision, a blind user, an aged user, a hand tremor user, etc. can easily use the apparatus.

### 2. Description of the Related Art

Generally, visual impairment refers to a visual function disability resulting from damage in the visual system. According to an extent to which eyesight and a range of vision are limited, visual impairment is classified into blindsight and low vision. The low vision disability refers to a low visual recognition ability in which it is possible to recognize an object but impossible to recognize small font letters, and it is difficult to recognize an object or letter at a long distance because of a short focal distance. The extent of the low vision disability varies depending on the cause and extent of visual impairment of each one.

To complement the visual function of such a visually impaired person with low vision, image magnifying apparatuses were introduced, which electronically magnify an image of a target, such as a book, a medicine bottle, a check, a newspaper, cash, etc., on which there are small letters.

Particularly, for example, in the case of a student who uses an image magnifying apparatus, he/she must be able to see letters of both a chalkboard and a book. To satisfy these conditions, an image magnifying apparatus which can cover a short distance and a long distance is required.

A conventional image magnifying apparatus is configured in such a way that a camera is disposed above a monitor that displays an image, and the orientation of the camera can be manually changed depending on whether it is used for a short or long distance. However, such an operation method of the conventional image magnifying apparatus in which a user manually rotates the camera depending on the purpose of use inconveniences the user. Particularly, in the case of a user such as the old, a hand tremor patient or a person with hand or arm dysfunction, it is very difficult to handle the apparatus. Moreover, if a fingerprint is applied to a lens of the camera, an image degradation phenomenon is caused. Degraded image quality may become a factor of gradually deterioration in the eyesight of a person with low vision.

Furthermore, the conventional image magnifying apparatus adjusts camera focus in such a way that a diopter lens is disposed on the lens of the camera when the apparatus is used for the short distance, and the diopter lens is removed from the lens of the camera when the apparatus is used for the long distance. The user must manually install the diopter lens onto the lens of the camera or remove it therefrom. However, there may be a case where an image of a long-distance target is output without the diopter lens being removed from the lens of the camera. In this case, the image is out of focus, and it is not easy for the user with low vision to determine whether the out-of-focusing problem is a problem resulting from incorrect setting of the diopter lens or not.

Furthermore, in the conventional image magnifying apparatus, the image quality is varied depending on the intensity of lighting in a place where the apparatus is used. If the brightness of the place is comparatively low, an image degradation phenomenon may occur due to low illuminance. This problem restricts a place where the image magnifying apparatus can be used, and the image quality inconveniences the user.

Therefore, development of an image magnifying apparatus, which is configured such that the orientation of a camera can be easily adjusted whether the apparatus is used for a short distance or a long distance, and the intensity of illuminance can be automatically adjusted depending on environmental conditions of a place where the apparatus is used, is required.

### SUMMARY OF THE INVENTION

Accordingly, the present invention has been made keeping in mind the above problems occurring in the prior art, and an object of the present invention is to provide an image magnifying apparatus which is configured such that a camera can be remotely operated to capture an image of a short-distance or long-distance target, disposition or removal of a diopter lens can be automatically adjusted depending on whether a target is at a short distance or at a long distance, and the intensity of lighting can be automatically controlled depending on illuminance of a place where the apparatus is used.

In order to accomplish the above object, the present invention provides an image magnifying apparatus, including: an image capturing unit provided with an image capturing device to capture an image of a target; a support unit coupled at a first end thereof to the image capturing unit; a base coupled to a second end of the support unit; and an output displaying an image captured by the image capturing device, wherein, on the assumption that a longitudinal direction of the base is designated as a first direction and a lateral direction of the base perpendicular to the first direction is designated as a second direction, the image magnifying apparatus further comprises: a first drive unit installed on the support unit, the first drive unit rotating the image capturing unit with respect to the first direction; and a second drive unit installed in the image capturing unit, the second drive unit rotating the image capturing unit with respect to the second direction.

The image capturing unit may include: a second lens installed on the image capturing unit so as to be rotatable such that the second lens can be disposed ahead of a first lens of the image capturing device, or removed from the first lens so that the image capturing unit can capture the image of the target that is positioned at a short distance or at a long distance; and a third drive unit rotating the second lens.

A fixed shaft may protrude from the first end of the support unit, with a first gear provided around a circumferential outer surface of the fixed shaft. The first drive unit may include: a first housing having a coupling hole into which the fixed shaft is inserted; an insert rod protruding upwards from an upper surface of the first housing, with a second gear provided around on a circumferential outer surface of the insert rod; and a first motor installed in the first housing and connected to a third gear engaging with the first gear of the fixed shaft, the first motor rotating the third gear such that the first housing is rotated around the fixed shaft. The second drive unit may include: a second housing in which the image capturing device is installed, the second housing being rotatably coupled to the insert rod; and a second motor installed in the second housing and connected to a fourth gear engaging with the second gear, the second motor rotating the fourth gear such that the second housing is rotated around the insert rod.

The third drive unit may include a third motor which is installed in the image capturing unit and rotates the second lens.

The third drive unit may include: a rotating rod rotatably installed in the image capturing unit, the rotating rod being provided at a first end thereof with the second lens and provided at a second end thereof with the first link plate; a third motor connected to a second link plate to rotate the second link plate; and a connection link connecting the second link plate to the first link plate so that the first link plate is rotated in a direction in which the second link plate is rotated.

The insert rod may be open on both ends thereof and have a hollow structure so that an internal space of the second housing connects with an internal space of the first housing. The support unit may have a hollow structure, and the fixed shaft may be open on both ends thereof and have a hollow structure so that an internal space of the support unit connects with an internal space of the first housing.

The image capturing unit may include: an illuminance sensor provided ahead of the image capturing device to sense brightness of a periphery of the image capturing unit; and a lighting device emitting light onto the target depending on the brightness sensed by the illuminance sensor.

The image magnifying apparatus may further include a control unit controlling the first drive unit, the second drive unit and the third drive unit in a wired or wireless manner.

The image capturing device may be disposed at a position spaced apart from the insert rod and the fixed shaft by a predetermined distance.

In an image magnifying apparatus according to the present invention, a first motor and a second motor are installed in an image capturing unit provided with an image capturing device. Thereby, the image capturing unit can be rotated upwards, downwards, leftwards and rightwards, and short- or long-distance image capturing operation can be remotely controlled.

Furthermore, the present invention is configured such that the first motor and second motor are operated in a wired or wireless manner. Therefore, a user, even one who has difficulty in directly controlling the orientation of the image capturing device, for example, a person with a hand tremor or a physically handicapped patient, can easily use the image magnifying apparatus. In addition, a first lens of the image capturing device can be prevented from being contaminated by a fingerprint of the user, whereby an image degradation phenomenon can be prevented from occurring.

In the present invention, depending on whether the image magnifying apparatus is used for the short-distance target or the long-distance target, the orientation of the image capturing device can be automatically controlled by the first motor and the second motor under the control of a control unit. Disposition or removal of a second lens which is used for focusing of the image capturing device is automatically converted by a third motor depending on the purpose of use of the image magnifying apparatus, thus providing convenience to the user, and reducing occurrence of an error resulting from unskilled manipulation. Moreover, when the image magnifying apparatus is converted between the short-distance mode and the long-distance mode, the orientation of the image capturing device can be automatically controlled using a former image capturing location which has been recorded, thus making it easy for a user with low vision to determine the location of a target.

Furthermore, when the image capturing device captures an image of a short-distance target, the second lens can be disposed precisely parallel to the first lens of the image capturing device by the third motor, thus preventing an image distortion phenomenon which may be caused when the first lens of the image capturing device and the second lens are misaligned from each other. Thereby, a clear image can be reliably provided to the user.

In addition, in the present invention, the image capturing unit is provided with an illuminance sensor which senses illuminance of a place where the target is located. If the illuminance is comparatively low, the intensity of light emitted from the lighting device is increased so that the quantity of light which enters the image capturing device can always be maintained constant, whereby a clear image can be reliably provided to the user.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a perspective view illustrating an image magnifying apparatus according to the present invention;
FIG. 2 is an exploded perspective view illustrating a critical part of a first drive unit according to the present invention;
FIG. 3 is an exploded perspective view illustrating a critical part of aSecond drive unit according to the present invention;
FIG. 4 is a sectional view showing an embodiment of the first drive unit according to the present invention;
FIG. 5 is a partially broken perspective view illustrating a critical part of a third drive unit according to the present invention;
FIG. 6 is another partially broken perspective view illustrating the critical part of the third drive unit according to the present invention;
FIG. 7 is a perspective view showing an image capturing unit from which a second lens has been removed so as to capture an image of a target at a long distance according to the present invention;
FIG. 8 is a perspective view illustrating the operation of rotating the image capturing unit using the first drive unit and the second drive unit according to the present invention;
FIG. 9 is a front view showing a range within which an image capturing device can capture an image at a short distance according to the present invention; and
FIG. 10 is a left side view showing the range within which the image capturing device can capture an image at a short distance according to the present invention.

### DESCRIPTION OF THE PREFERRED EMBODIMENTS

Hereinafter, a preferred embodiment of the present invention will be described in detail with reference to the attached drawings so that those skilled in the art can easily embody the present invention. Furthermore, the present invention can be modified into various shapes rather than being limited to the following embodiment.

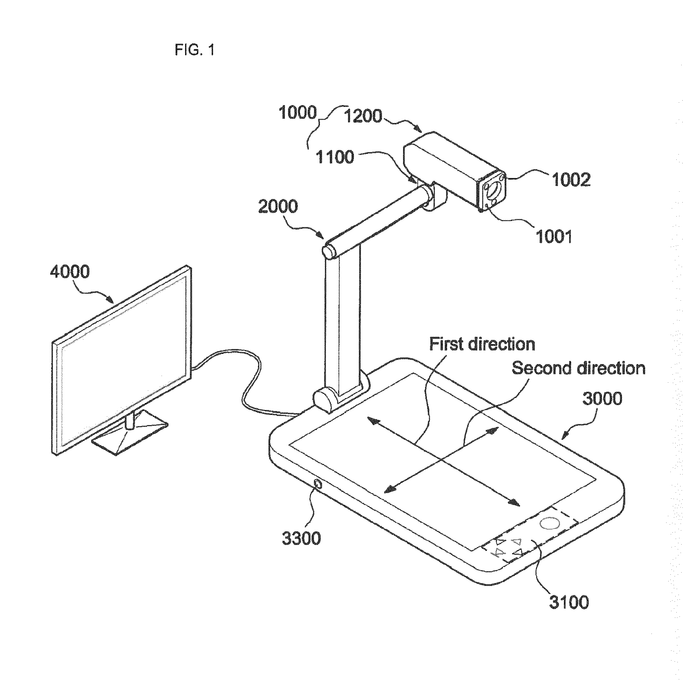

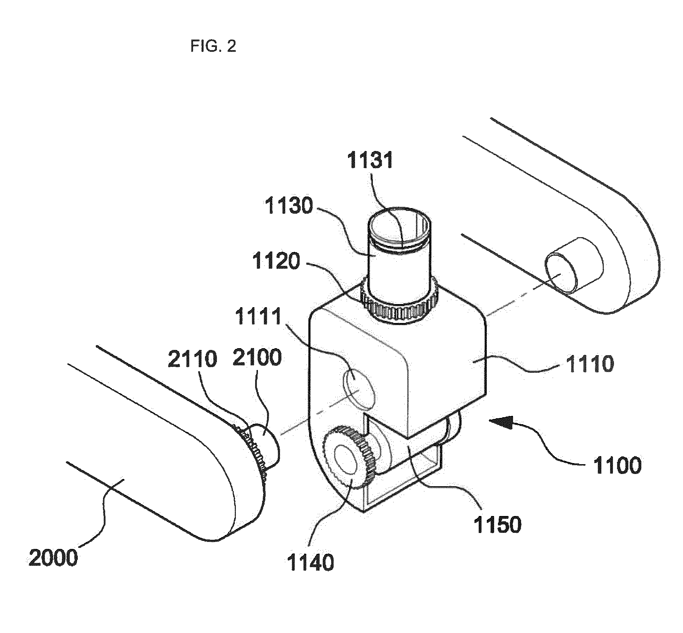

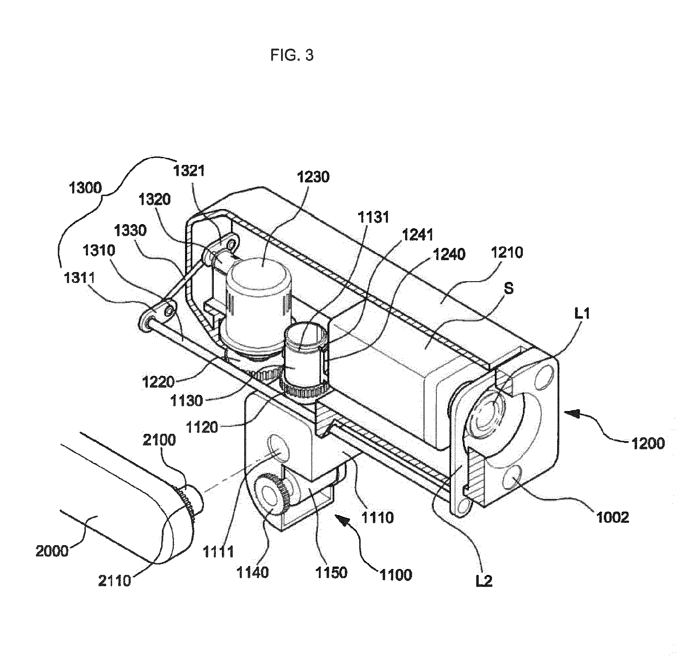

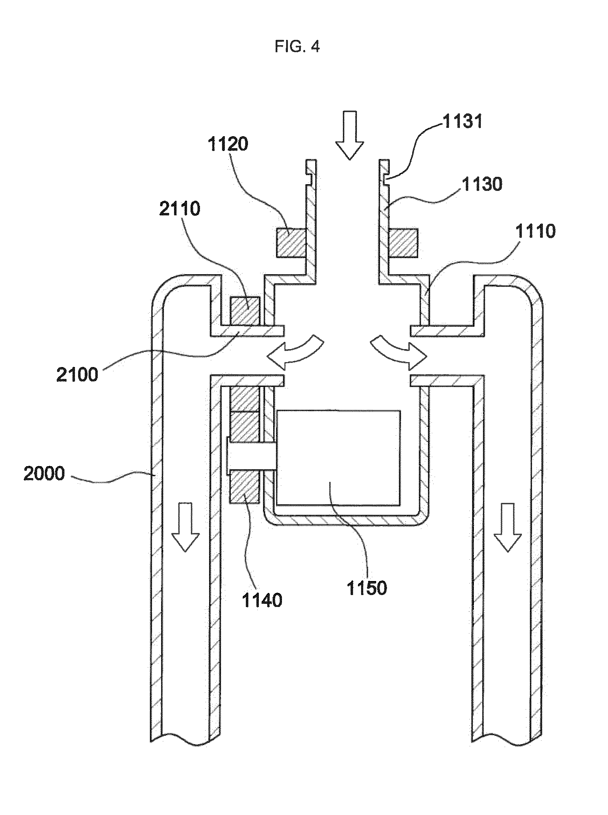

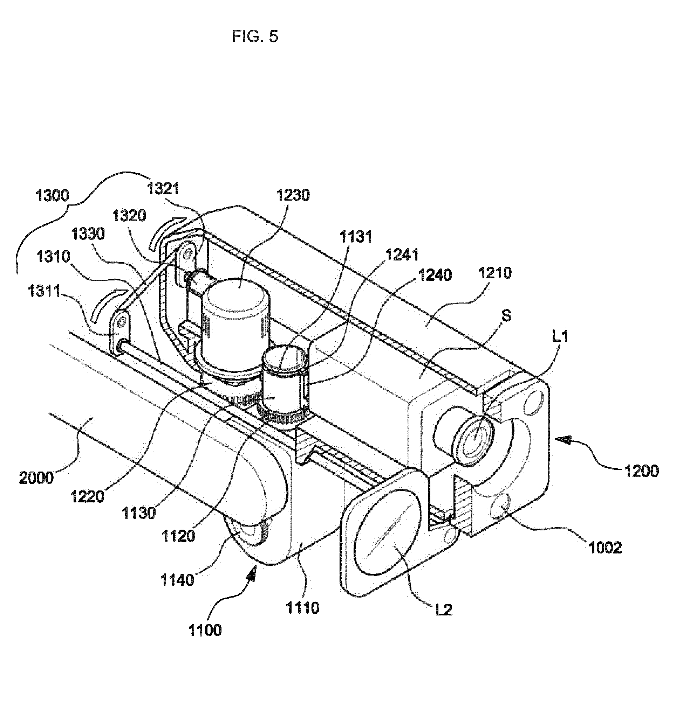

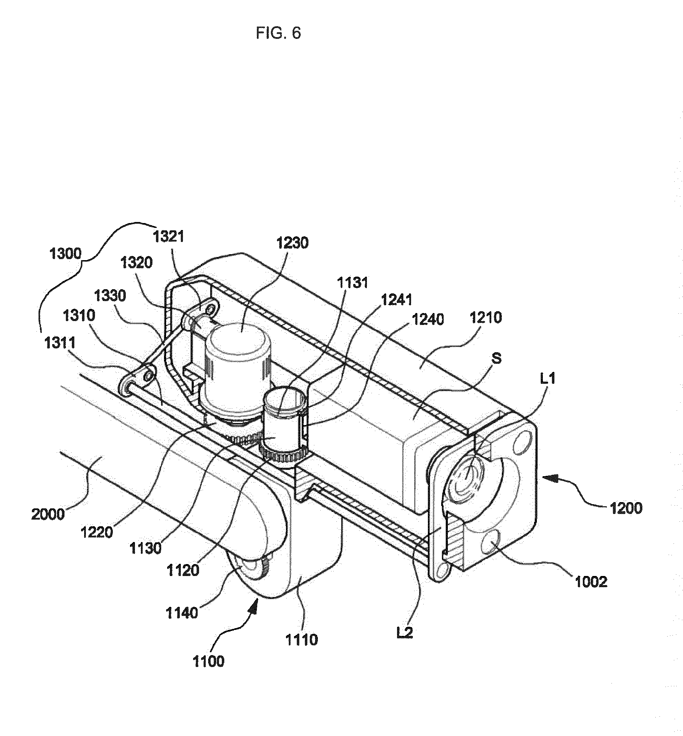

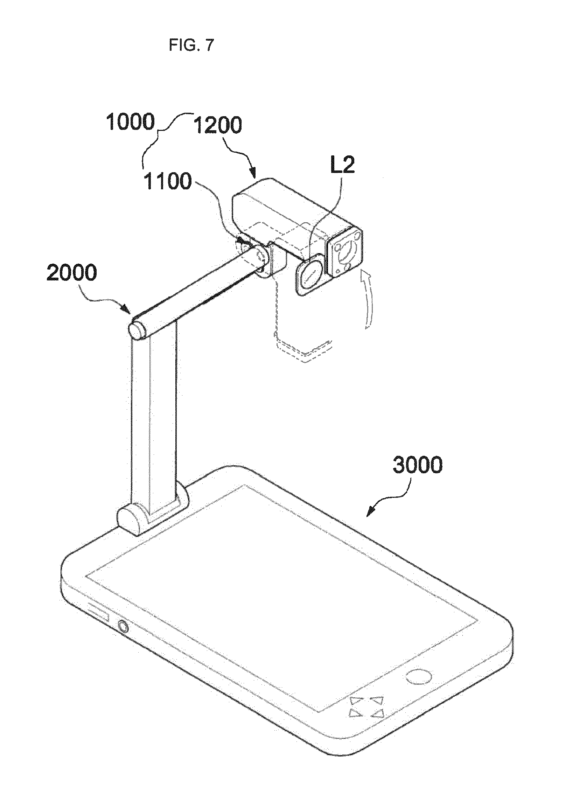

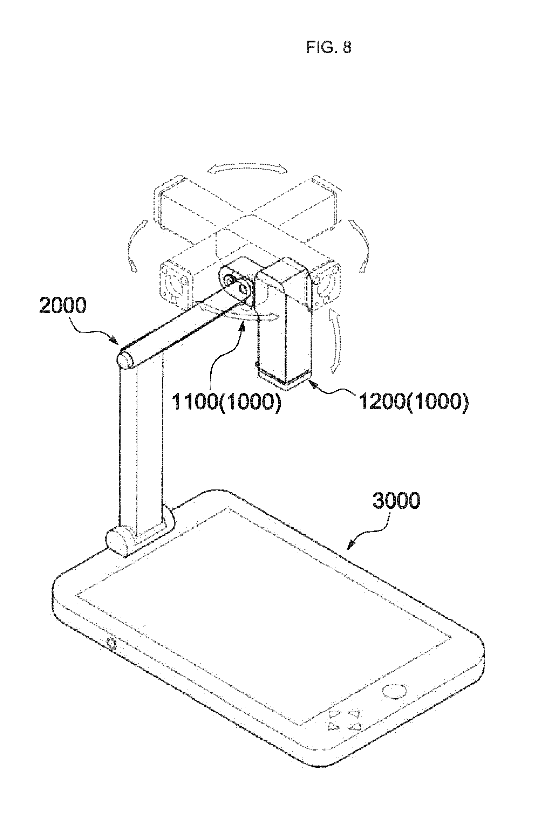

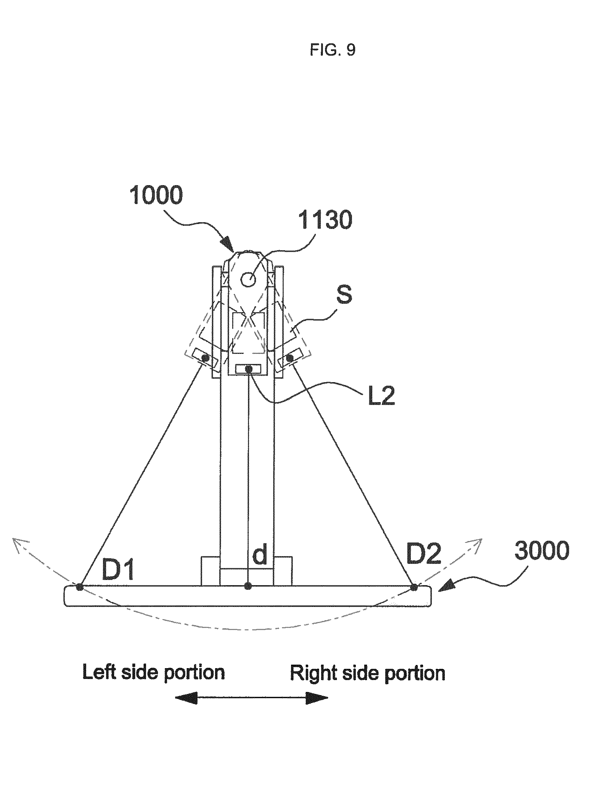

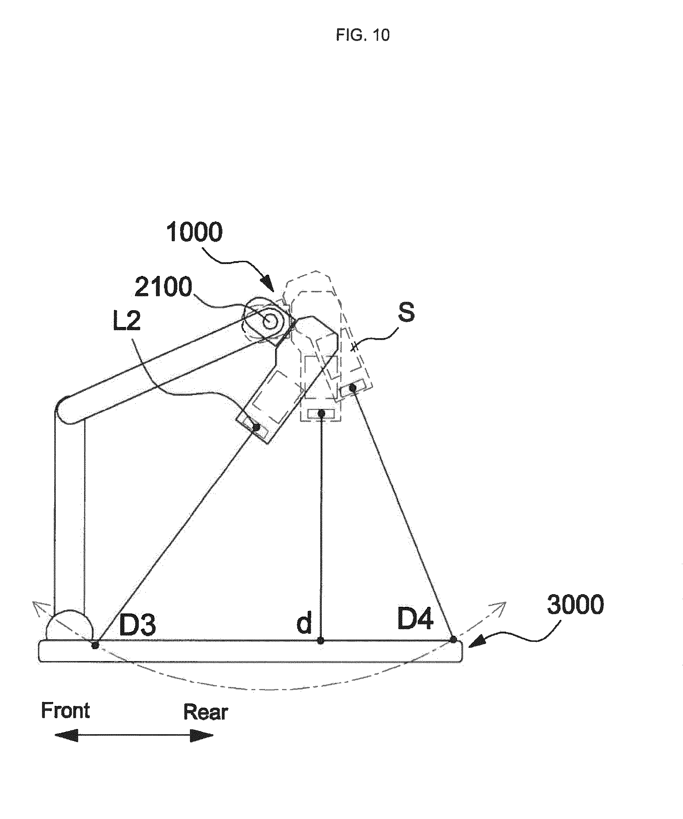

FIG. 1 is a perspective view illustrating an image magnifying apparatus according to the present invention. FIG. 2 is an exploded perspective view illustrating a critical part of a first drive unit according to the present invention. FIG. 3 is an exploded perspective view illustrating a critical part of a second drive unit according to the present invention. FIG. 4 is a sectional view showing an embodiment of the first drive unit according to the present invention. FIG. 5 is a partially broken perspective view illustrating a critical part of a third drive unit according to the present invention. FIG. 6 is another partially broken perspective view illustrating the critical part of the third drive unit according to the present invention. FIG. 7 is a perspective view showing an image capturing unit from which a second lens has been removed so as to capture an image of a target at a long distance according to the present invention. FIG. 8 is a perspective view illustrating the operation of rotating the image capturing unit using the first drive unit and the second drive unit according to the present invention. FIG. 9 is a front view showing a range within which the image capturing device can capture an image at a short distance according to the present invention. FIG. 10 is a left side view showing the range within which the image capturing device can capture an image at a short distance according to the present invention.

Referring to FIG. 1, the image magnifying apparatus according to the present invention includes an image capturing unit 1000, a support unit 2000, a base 3000 and an output unit 4000. The image capturing unit 1000 includes an image capturing device S which captures an image of a target. The image capturing unit 1000 is rotatably coupled to a first end of a support unit 2000. A second end of the support unit 2000 is rotatably coupled to the base 3000. The base 3000 is configured to be able to structurally stably support the support unit 2000 and the image capturing unit 1000 structurally stably. The following shape and structure of the base 3000 are only one embodiment. The image magnifying apparatus of the present invention has a foldable structure. The output unit 4000 displays an image captured by the image capturing device S.

As shown in FIG. 1, a direction corresponding to a longitudinal direction of the base 3000 is designated as a first direction, while a direction perpendicular to the first direction is expressed as a second direction.

The image capturing unit 1000 includes a first drive unit 1100 and a second drive unit 1200. The first drive unit 1100 is installed on the first end of the support unit 2000 and rotates the image capturing unit 1000 with respect to the first direction. The second drive unit 1200 rotates the image capturing unit 1000 with respect to the second direction. In other words, the image capturing unit 1000 can be rotated by the first drive unit 1100 or the second drive unit 1200 in the first or second direction such that it can capture not only an image of a short-distance target that is placed on the base 3000 but also an image of a far-distance target that is positioned at a long distance.

Referring to FIG. 3, the image capturing unit 1000 includes a third drive unit 1300. The third drive unit 1300 is installed in the image capturing unit 1000 and functions to rotate a second lens L2 which is rotatably installed in the image capturing unit 1000. The second lens L2 is disposed in front of a first lens L1 of the image capturing device S. The second lens L2 is used to bring the image capturing device S into focus when capturing an image of a target which is positioned at a long distance or short distance, whereby a clear image can be provided to a user by the output unit 4000.

The third drive unit 1300 includes a third motor 1320. The third motor 1320 is provided with a rotating shaft which is integrally rotated along with the third motor 1320 when the third motor 1320 is operated. The second lens L2 is connected to the rotating shaft of the third motor 1320 and is rotated in a direction in which the third motor 1320 rotates. In other words, the second lens L2 is directly connected to the third motor 1320. Therefore, as the third motor 1320 rotates in one direction, the second lens L2 is installed onto or removed from the front of the first lens L1 so as to bring the first lens L1 into focus suitable for the image-capturing purpose.

In the present invention, the third drive unit 1300 comprises the third motor 1320 which is installed in the image capturing unit 1000 and functions to rotate the second lens L2.

Referring to FIG. 2, a fixed shaft 2100 protrudes from the first end of the support unit 2000, and a first gear 2110 is formed around a circumferential outer surface of the fixed shaft 2100.

The first drive unit 1100 includes a first housing 1110. The first housing 1110 has a coupling hole 1111 into which the fixed shaft 2100 of the support unit 2000 is inserted, and can rotate around the fixed shaft 2100 which is disposed in the coupling hole 1111. An insert rod 1130 is provided on an upper surface of the first housing 1110, and protrudes upwards from the upper surface of the first housing 1110 and is integrally formed on the first housing 1110. A second gear 1120 is formed around a circumferential outer surface of the insert rod 1130. A first motor 1150 is installed in the first housing 1110. A stepper motor, a DC motor or a servo motor which can be reversibly rotated is used as the first motor 1150. The first motor 1150 is connected to a third gear 1140 which engages with the first gear 2110, and when the first motor 1150 rotates, the third gear 1140 rotates on its own axis and simultaneously revolves around the fixed shaft 2100 while engaging with the first gear 2110. Therefore, the first housing 1110 can be rotated around the fixed shaft 2100.

Referring to FIG. 3, the second drive unit 1200 includes a second housing 1210, and the image capturing device S is installed in the second housing 1210. A guide rod 1240 is integrally installed in the second housing 1210 and has a hollow cylindrical pipe shape so that the insert rod 1130 can be inserted into the guide rod 1240. The insert rod 1130 is rotatably disposed in the guide rod 1240. Thereby, the second housing 1210 can be rotated around the insert rod 1130.

A coupling groove 1131 is formed in a circumferential outer surface of an upper end of the insert rod 1130. A snap ring 1241 is fitted into the coupling groove 1131. The snap ring 1241 is placed on an upper end of the guide rod 1240 while an inner edge of the snap ring 1241 is fitted into the coupling groove 1131, whereby the insert rod 1130 is coupled to the guide rod 1240. As such, the snap ring 1241 prevents the second housing 1210 from being removed upwards from the insert rod 1130.

Referring to FIG. 3, a second motor 1230 is installed in the second housing 1210. A stepper motor, a DC motor or a servo motor which can be reversibly rotated is used as the second motor 1230. The second motor 1230 is connected to a fourth gear 1220 which engages with the second gear 1120 so that the fourth gear 1220 is rotated by the second motor 1230. That is, when the second motor 1230 rotates, the fourth gear 1220 rotates on its own axis and simultaneously revolves around the insert rod 1130 while engaging with the second gear 1120. Therefore, the second housing 1210 can be rotated around the insert rod 1130 by the operation of the second motor 1230.

Referring to FIG. 4, the insert rod 1130 has a hollow cylindrical pipe shape which is open on both ends thereof. As such, because the insert rod 1130 is the hollow cylindrical pipe that is open on both ends thereof, the internal space of the second housing 1210 and the internal space of the first housing 1110 connects with each other through the insert rod 1130.

As shown in FIG. 4, the support unit 2000 has a hollow structure. The fixed shaft 2100 provided on the support unit 2000 has a hollow cylindrical pipe shape which is open on both ends thereof. Because the fixed shaft 2100 is disposed in the first housing 1110, the internal space of the support unit 2000 connects with the internal spaces of the first and second housings 1110 and 1210. By virtue of this structure in which the internal space of the support unit 2000 connects with the internal spaces of the first and second housings 1110 and 1210, cables which are used to supply power to the image capturing device S and the first through third motors 1150, 1230 and 1320, signal lines which are used for transmission of images, signal lines which are used to control the motors, etc. can lead out of the apparatus through the support unit 2000.

Referring to FIGS. 5 and 6, the third drive unit 1300 includes a rotating rod 1310. The rotating rod 1310 extends a predetermined length in a longitudinal direction of the second housing 1210, and is rotatably installed in the second housing 1210. The rotating rod 1310 is connected at a first end thereof to the second lens L2, and the second lens L2 is integrally rotated along with the rotating rod 1310. A first link plate 1311 is provided on a second end of the rotating rod 1310. The first link plate 1311 has a plate shape having a predetermined thickness.

As shown in FIGS. 5 and 6, a second link plate 1321 is provided, having the same shape as that of the first link plate 1311. The second link plate 1321 is connected to the third motor 1320 such that the second link plate 1321 is rotated by the operation of the third motor 1320. A stepper motor, a DC motor or a servo motor which can be reversibly rotated is used as the third motor 1320.

The first link plate 1311 is connected to the second link plate 1321 by a connection link 1330. That is, a first end of the connection link 1330 is rotatably connected to the first link plate 1311, and a second end thereof is rotatably connected to the second link plate 1321. When the third motor 1320 is operated, the second link plate 1321 is rotated, and the rotating force which is transmitted from the third motor 1320 to the second link plate 1321 is transmitted to the first link plate 1311 through the connection link 1330. Then, the first link plate 1311 is rotated in a direction in which the second link plate 1321 rotates. The rotating rod 1310 and the second lens L2 are rotated by the rotation of the first link plate 1311. The third motor 1320 can rotate the second lens L2 in the above-mentioned manner.

Referring to FIGS. 5 and 7, in order to capture an image of the target at a short distance using the image capturing device S, the third motor 1320 rotates in the normal direction and disposes the second lens L2 in front of the first lens L1, thus bringing the first lens L1 of the image capturing device S into focus. On the contrary, to capture an image of the target at a long distance using the image capturing device S, the third motor 1320 reversely rotates so that the second lens L2 is removed from the front of the first lens L1.

Referring to FIGS. 9 and 10, after the second lens L2 of the image capturing device S has been positioned at a position spaced apart from the insert rod 1130 and the fixed shaft 2100, the image capturing device S can capture images of all areas of the target placed on the base 3000 with focus at a close range in such a way that the image capturing unit 1000 rotates with respect to the first and second directions.

In the case where the image capturing unit 1000 rotates with respect to the first direction, when the image capturing device S captures an image of a portion of the target that is disposed on a left or right side portion of the base 3000, a distance between the second lens L2 and a point D1 of the left side portion of the base 3000 or a point D2 of the right side portion thereof is the longest distance at which the image capturing device S can capture an image of the target at a close range. The distance between the second lens L2 and the point D1 is the same as the distance between it and the point D2. Furthermore, a distance between the second lens L2 and a target point d which is formed on the upper surface of the base 3000 is within the distance range defined by the point D1 or D2 which is disposed on the left or right side portion of the base 3000. As such, the image capturing device S can capture images of all the areas between the left and right side portions of the base 3000 at a close range.

In the case where the image capturing unit 1000 rotates with respect to the second direction, when the image capturing device S captures an image of a portion of the target that is disposed on a front or rear side portion of the base 3000, a distance between the second lens L2 and top of paper D3 of the front side portion of the base 3000 or bottom of paper D4 of the rear side portion thereof is the longest distance at which the image capturing device S can capture an image of the target at a close range. The distance between the second lens L2 and the top of paperD3 is the same as the distance between it and bottom of paperD4. Furthermore, a distance between the second lens L2 and the target point d is within the distance range at which the image capturing device S can capture an image of the target at a close range. Therefore, the image capturing device S can capture images of all the areas between the front and rear side portions of the base 3000 at a close range.

Referring to FIG. 1, an illuminance sensor 1001 is installed in the first housing 1210 of the image capturing unit 1000. In detail, the illuminance sensor 1001 is disposed ahead of the image capturing device S so as to sense the brightness of the periphery of the image capturing unit 1000.

Furthermore, a lighting device 1002 is provided in the first housing 1210 of the image capturing unit 1000, as shown in FIG. 1. The lighting device 1002 is disposed in the front of the image capturing device S. Depending on the brightness of the periphery of the image capturing unit 1000 that is sensed by the illuminance sensor 1001, the lighting device 1002 emits light onto the target. A plurality of lighting devices 1002 may be provided.

Referring to FIG. 1, the image magnifying apparatus according to the present invention further includes a control unit 3100 which controls the first motor 1150 of the first drive unit 1100, the second motor 1230 of the second drive unit 1200 and the third motor 1320 of the third drive unit 1300. The control unit 3100 may be integrally provided in the base 3000 or the support unit 2000 such that it can control the first motor 1150, the second motor 1230 and the third motor 1320 in a wired manner. Alternatively, the control unit 3100 may be a separate remote controller type such that the first, second and third motors 1150, 1230 and 1320 are controlled in a wireless manner.

As shown in FIG. 1, a sound input terminal 3300 which is connected to a sound input device may be provided in the base 3000 or the support unit 2000 to record sound when the image capturing device S is capturing images of the target.

Referring to FIG. 8, the present invention is configured such that the image capturing unit 1000 can be rotated forwards, rearwards, leftwards or rightwards, thus facilitating the operation of selectively capturing an image of a short-distance target or a long-distance target.

Furthermore, the first motor 1150, the second motor 1230 and the third motor 1320 can be controlled in a wired or wireless manner. Thus, a user, even one who has difficulty in directly controlling the orientation of the image capturing device, for example, a person with a hand tremor or a physically handicapped patient, can easily use the image magnifying apparatus.

Moreover, the first lens L1 and the second lens L2 of the image capturing device S of the present invention can be arranged precisely parallel to each other by the third motor 1320, thus preventing an image distortion phenomenon which may be caused when the first lens L1 and the second lens L2 are misaligned from each other. Thereby, a clear image can be reliably provided to the output unit 4000.

Although the preferred embodiment of the present invention has been disclosed for illustrative purposes, those skilled in the art will appreciate that various modifications, additions and substitutions are possible, without departing from the scope and spirit of the invention as disclosed in the accompanying claims.

## Claims

1. An image magnifying apparatus, comprising:
an image capturing unit(1000) provided with an image capturing device(S) to capture an image of a target; a support unit(2000) coupled at a first end thereof to the image capturing unit(1000); a base(3000) coupled to a second end of the support unit(2000); and an output displaying unit(4000) an image captured by the image capturing device(S),
**characterized in that** on the assumption that a longitudinal direction of the base(3000) is designated as a first direction and a lateral direction of the base(3000) perpendicular to the first direction is designated as a second direction, the image magnifying apparatus further comprises: a first drive unit(1100) installed on the support unit(2000), the first drive unit(1100) rotating the image capturing unit(1000) with respect to the first direction; and a second drive unit(1200) installed in the image capturing unit(1000), the second drive unit(1200) rotating the image capturing unit with respect to the second direction.

2. The image magnifying apparatus as set forth in claim 1, wherein the image capturing unit comprises:
a second lens(L2) installed on the image capturing unit(1000) so as to be rotatable such that the second lens(L2) can be disposed ahead of a first lens(L1) of the image capturing device(S), or removed from the first lens(L1) so that the image capturing unit(1000) can capture the image of the target that is positioned at a short distance or at a long distance; and
a third drive unit(1300) rotating the second lens(L2).

3. The image magnifying apparatus as set forth in claim 1, wherein a fixed shaft(2100) protrudes from the first end of the support unit(2000), with a first gear(2110) provided around a circumferential outer surface of the fixed shaft(2100),
the first drive unit(1100) comprises: a first housing(1110) having a coupling hole(1111) into which the fixed shaft(21 00) is inserted; an insert rod(1130) protruding upwards from an upper surface of the first housing(1110), with a second gear(1120) provided around on a circumferential outer surface of the insert rod(1130); and a first motor(1150) installed in the first housing(1110) and connected to a third gear(1140) engaging with the first gear(2110) of the fixed shaft(21 00), the first motor(1150) rotating the third gear(1140) such that the first housing(1110) is rotated around the fixed shaft(21 00), and
the second drive unit(1200) comprises: a second housing(1210) in which the image capturing device(S) is installed, the second housing(1210) being rotatably coupled to the insert rod(1130); and a second motor(1230) installed in the second housing(1210) and connected to a fourth gear(1220) engaging with the second gear(1230), the second motor(1230) rotating the fourth gear(1220) such that the second housing(1210) is rotated around the insert rod(1130).

4. The image magnifying apparatus as set forth in claim 2, wherein the third drive unit(1300) comprises a third motor(1320) installed in the image capturing unit(1000), the third motor(1320) rotating the second lens(L2).

5. The image magnifying apparatus as set forth in claim 2, wherein the third drive unit(1300) comprises:
a rotating rod(1310) rotatably installed in the image capturing unit(1000), the rotating rod(1310) being provided at a first end thereof with the second lens(L2) and provided at a second end thereof with the first link plate(1311);
a third motor(1320) connected to a second link plate(1321) to rotate the second link plate(1321); and
a connection link(1330) connecting the second link plate(1321) to the first link plate(1311) so that the first link plate(1311) is rotated in a direction in which the second link plate(1321) is rotated.

6. The image magnifying apparatus as set forth in claim 3, wherein the insert rod(1130) is open on both ends thereof and has a hollow structure so that an internal space of the second housing(1210) connects with an internal space of the first housing(1110), and
the support unit(2000) has a hollow structure, and the fixed shaft(21 00) is open on both ends thereof and has a hollow structure so that an internal space of the support unit(2000) connects with an internal space of the first housing(1110).

7. The image magnifying apparatus as set forth in claim 1, wherein the image capturing unit(1000) comprises:
an illuminance sensor(1001) provided ahead of the image capturing device(S) to sense brightness of a periphery of the image capturing unit(1000); and
a lighting device(1002) emitting light onto the target depending on the brightness sensed by the illuminance sensor(1001).

8. The image magnifying apparatus as set forth in claim 2, further comprising
a control unit(3100) controlling the first drive unit(1100), the second drive unit(1200) and the third drive unit(1300) in a wired or wireless manner.

9. The image magnifying apparatus as set forth in claim 3, wherein the image capturing device(S) is disposed at a position spaced apart from the insert rod(1130) and the fixed shaft(21 00) by a predetermined distance.
